# EUROPÄISCHE PATENTANMELDUNG

(11) **EP 4 644 041 A1**
(43) Veröffentlichungstag der Anmeldung: **05.11.2025**
(21) Anmeldenummer: 24172991.2
(22) Anmeldetag: 29.04.2024
(51) Int. Cl.: B23Q 3/06, A61C 13/00

(54) **SPANNHALTER FÜR EINEN DENTALEN ROHLING**

(71) Anmelder: Ivoclar Vivadent AG, 9494 Schaan (LI)
(72) Erfinder: Meier, Patrick, 6713 Ludesch (AT); Jarasevic, Muhamed, 6700 Bludenz (AT); Habit, Andreas, 6774 Tschagguns (AT)
(74) Vertreter: Baldus, Oliver

(57) **Zusammenfassung**

Spannhalter (100) für einen dentalen Rohling (103), mit einem ersten und einem zweiten Spannelement (105-1, 105-2) zum Einspannen des dentalen Rohlings (103); und einem Magnetmechanismus (107-1, 107-2) zum Auseinanderdrücken des ersten und des zweiten Spannelementes (105-1, 105-2) in einer Öffnungsstellung.

## Beschreibung

Die vorliegende Erfindung betrifft einen Spannhalter für einen dentalen Rohling und ein Verfahren zum Einspannen eines dentalen Rohlings in einen Spannhalter.

Das Öffnen eines Spannhalters und die Entnahme eines dentalen Rohlings ist bei bestehenden Spannhaltern oft schwierig. Zwar ist eine Entnahme gut möglich, wenn man die Materialscheibe des dentalen Rohlings einschließlich des ringförmigen Spannelements von unten nach oben durch den Spannhalter drückt. Diese Vorgehensweise ist jedoch zu Anfang nicht intuitiv, sondern muss mühsam erlernt werden. Ein Benutzer hat jedoch das Bedürfnis einen dentalen Rohling möglichst einfach und sicher wechseln und spannen zu können. Dabei ist es wichtig, dass das Handling möglichst einfach und intuitiv ist.

Bisher wurde das Problem so gelöst, dass ein Spannelement mitsamt dem dentalen Rohling von unten nach oben gedrückt wird und gemeinsam entnommen wird. Das typische Vorgehen hierbei ist, den gesamten Spannhalter mit dem dentalen Rohling und dem ringförmigen Spannelement umzudrehen, sodass das Spannelement und der dentale Rohling zusammen aus dem Spannhalter rutschen. Anschließend kann das Spannelement von dem dentalen Rohling getrennt werden.

Es ist daher die technische Aufgabe der vorliegenden Erfindung, das Entnehmen eines dentalen Rohlings aus einem Spannhalter zu erleichtern.

Diese Aufgabe wird durch Gegenstände nach den unabhängigen Ansprüchen gelöst. Vorteilhafte Ausführungsformen sind Gegenstand der abhängigen Ansprüche, der Beschreibung und der Figuren.

Gemäß einem ersten Aspekt wird die technische Aufgabe durch einen Spannhalter für einen dentalen Rohling gelöst, mit einem ersten und einem zweiten Spannelement zum Einspannen des dentalen Rohlings; und einem Magnetmechanismus zum Auseinanderdrücken des ersten und des zweiten Spannelementes in einer Öffnungsstellung. Durch den Magnetmechanismus wird der technische Vorteil erreicht, dass sich die Spannelemente des Spannhalters in der Öffnungsstellung voneinander trennen lassen und das Einlegen des dentalen Rohlings erleichtert wird. Das Handling beim werkzeuglosen Spannen des dentalen Rohlings wird weiter verbessert. Der Benutzer erhält zudem durch den Magnetmechanismus ein haptisches und akustisches Feedback beim Öffnen des Spannhalters. Die Position des Spannelementes zur Entnahme wird erhöht und gehalten. Dadurch wird ein Spannsystem realisiert, das intuitiv und möglichst einfach zu bedienen ist.

In einer technisch vorteilhaften Ausführungsform des Spannhalters ist der Magnetmechanismus durch ein erstes Magnetelement in oder an dem ersten Spannelement und ein zweites Magnetelement in oder an dem zweiten Spannelement gebildet. Dadurch wird beispielsweise der technische Vorteil erreicht, dass der Magnetmechanismus auf einfache Weise implementiert werden kann.

In einer weiteren technisch vorteilhaften Ausführungsform des Spannhalters sind das erste Magnetelement und das zweite Magnetelement gleichpolig zueinander angeordnet. Bei der gleichpoligen Anordnung liegen sich die beiden Nordpole oder die beiden Südpole der Magnetelemente gegenüber. Bei der gleichpoligen Anordnung entsteht eine Abstoßungskraft zwischen den Magnetelementen. Dadurch wird beispielsweise der technische Vorteil erreicht, dass sich eine starke Kraft zum Auseinanderdrücken der Spannelemente ergibt.

In einer weiteren technisch vorteilhaften Ausführungsform des Spannhalters umfasst das erste und/oder das zweite Spannelement ein ferromagnetisches Material. Dadurch wird beispielsweise der technische Vorteil erreicht, dass die Magnetelemente mit dem jeweiligen ferromagnetischen Material im entgegengesetzten Spannhalter zusammenwirken können.

In einer weiteren technisch vorteilhaften Ausführungsform des Spannhalters ist das erste und/oder zweite Magnetelement derart angeordnet, dass eine Spannkraft zwischen dem ersten Spannelement und dem zweiten Spannelement in einer Schließstellung ausgeübt wird. Dadurch wird beispielsweise der technische Vorteil erreicht, dass eine Lagerung des dentalen Rohlings in der Schließstellung verbessert wird und ein unbeabsichtigtes Lösen der Spannelemente verhindert wird.

In einer weiteren technisch vorteilhaften Ausführungsform des Spannhalters sind das erste und das zweite Magnetelement gegeneinander verschiebbar oder verdrehbar. Dadurch wird beispielsweise der technische Vorteil erreicht, dass sich die Kräfte zwischen den Spannelementen durch die Magnetelemente auf einfache Weise verändern lassen.

In einer weiteren technisch vorteilhaften Ausführungsform des Spannhalters ist das erste Magnetelement in einer Kontaktfläche des ersten Spannelements zu dem zweiten Spannelement integriert und/oder das zweite Magnetelement ist in einer Kontaktfläche des zweiten Spannelements zu dem ersten Spannelement integriert. Dadurch wird beispielsweise der technische Vorteil erreicht, dass ein integraler Aufbau erreicht wird und Kräfte effizient zwischen den Spannelementen übertragen werden.

In einer weiteren technisch vorteilhaften Ausführungsform des Spannhalters umfasst das erste Spannelement mehrere Magnetelemente und/oder das zweite Spannelement umfasst mehrere Magnetelemente. Dadurch wird beispielsweise der technische Vorteil erreicht, dass sich Kräfte zwischen den Spannelementen gleichmäßig übertragen lassen.

In einer weiteren technisch vorteilhaften Ausführungsform des Spannhalters sind die Magnetelemente um eine Aussparung zum Einlegen des dentalen Rohlings herum angeordnet. Dadurch wird beispielsweise der technische Vorteil erreicht, dass ein gleichmäßiges Öffnen des Spannhalters erreicht wird.

In einer weiteren technisch vorteilhaften Ausführungsform des Spannhalters umfasst das erste und/oder zweite Magnetelement Neodym. Dadurch wird beispielsweise der technische Vorteil erreicht, dass der Magnetmechanismus starke Kräfte erzeugen kann.

In einer weiteren technisch vorteilhaften Ausführungsform des Spannhalters ist das erste und/oder das zweite Spannelement C-förmig oder ringförmig. Dadurch wird beispielsweise der technische Vorteil erreicht, dass eine umgreifende Halterung des dentalen Rohlings erzielt wird.

Gemäß einem zweiten Aspekt wird die technische Aufgabe durch ein Verfahren zum Einspannen eines dentalen Rohlings in einen Spannhalter gelöst, mit den Schritten eines Einspannens des dentalen Rohlings zwischen einem ersten Spannelement und einem zweiten Spannelement; und eines Auseinanderdrückens des ersten und des zweiten Spannelementes in einer Öffnungsstellung durch einen Magnetmechanismus. Durch das Verfahren werden die gleichen technischen Vorteile wie durch den Spannhalter nach dem ersten Aspekt erreicht.

In einer technisch vorteilhaften Ausführungsform des Verfahrens wird eine Spannkraft zwischen dem ersten Spannelement und dem zweiten Spannelement in einer Schließstellung durch den Magnetmechanismus ausgeübt. Dadurch wird beispielsweise der technische Vorteil erreicht, dass das Einspannen des dentalen Rohlings zwischen den Spannelementen verbessert wird und ein unbeabsichtigtes Lösen der Spannelemente verhindert wird.

In einer weiteren technisch vorteilhaften Ausführungsform des Verfahrens werden das erste und das zweite Spannelement an mehreren Positionen durch den Magnetmechanismus auseinandergedrückt. Dadurch wird beispielsweise der technische Vorteil erreicht, dass die Spannelemente gleichmäßig auseinandergedrückt werden können.

In einer weiteren technisch vorteilhaften Ausführungsform des Verfahrens werden das erste und das zweite Spannelement zwischen der Öffnungsstellung und der Schließstellung verdreht. Dadurch wird beispielsweise der technische Vorteil erreicht, dass sich die unterschiedlichen Wirkungen des Magnetmechanismus auf einfache Weise realisieren lassen.

Ausführungsbeispiele der Erfindung sind in den Zeichnungen dargestellt und werden im Folgenden näher beschrieben.

Es zeigen:
- Fig. 1: eine perspektivische Ansicht eines Spannhalters;
- Fig. 2: eine weitere perspektivische Ansicht des Spannhalters in einer Öffnungsstellung;
- Fig. 3: eine weitere perspektivische Ansicht des Spannhalters in der Öffnungsstellung;
- Fig. 4: eine perspektivische Ansicht des Spannhalters in der Schließstellung;
- Fig. 5: eine weitere perspektivische Ansicht des Spannhalters in der Schließstellung;
- Fig. 6: eine Aufsicht auf einen Spannhalter in einer Übergangsstellung;
- Fig. 7: eine weitere perspektivische Ansicht des Spannhalters in der Schließstellung; und
- Fig. 8: ein Blockdiagramm eines Verfahrens zum Sintern von Dentalobjekten.

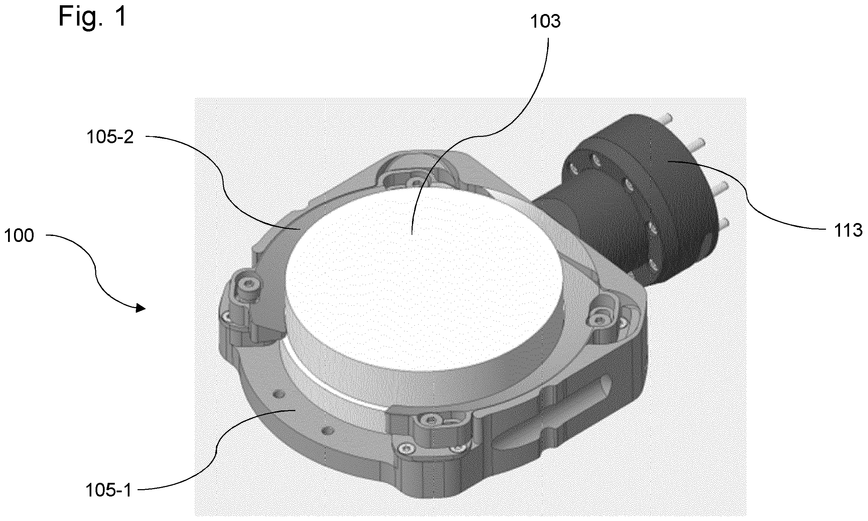

Fig. 1 zeigt eine perspektivische Ansicht eines werkzeuglosen Spannhalters 100 zum Einspannen eines dentalen Rohlings 103.

Der Spannhalter 100 dient zum Einspannen eines dentalen Rohlings 103 zur Bearbeitung in einer Bearbeitungsmaschine, wie beispielsweise einer Fräsmaschine. Der dentale Rohling 103 ist durch eine kreisrunde Scheibe gebildet und beispielsweise aus Zirkondioxid hergestellt. Im Allgemeinen kann der dentale Rohling 103 und der entsprechende Spannhalter 100 jedoch auch eine andere Form aufweisen.

Bei der Bearbeitung des dentalen Rohlings 103 wird dieser zwischen einem ersten Spannelement 105-1 und einem zweiten Spannelement 105-2 des Spannhalters 100 gehalten. Das Spannelement 105-1 bildet einen Grundkörper und das Spannelement 105-2 bildet einen Spannring. Bei der Bearbeitung werden aus dem dentalen Rohling 103 einzelne Dentalobjekte herausgefräst, wie beispielsweise Kronen oder Brücken. Der Spannhalter 100 wird über eine mechanische Schnittstelle 113 in der Bearbeitungsmaschine befestigt.

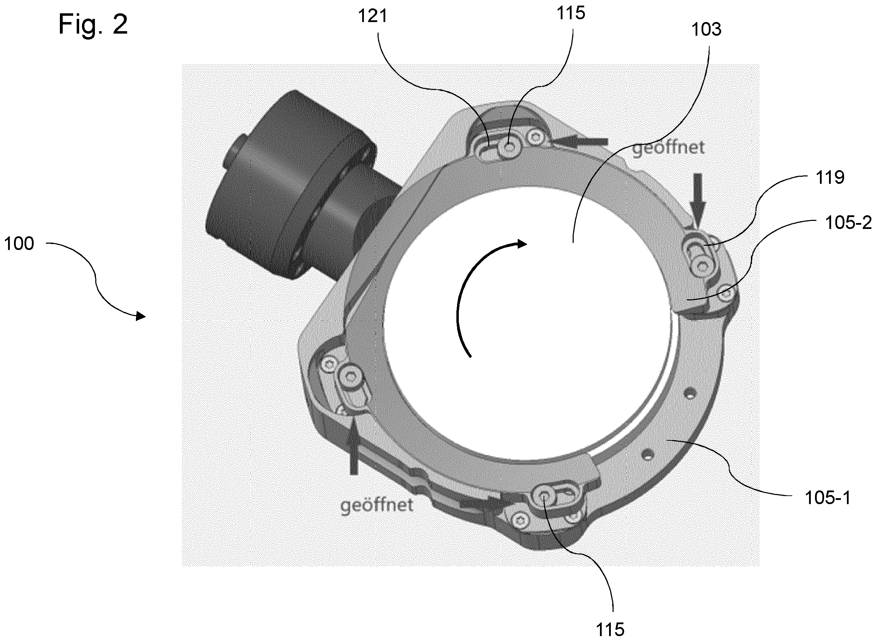

Fig. 2 zeigt eine weitere perspektivische Ansicht des Spannhalters 100 in einer Öffnungsstellung. In der Öffnungsstellung können das erste Spannelement 105-1 und das zweite Spannelement 105-2 voneinander getrennt werden und der dentale Rohling 103 zwischen den beiden Spannelementen 105-1 und 105-2 eingelegt werden. Auf diese Weise kann ein neuer dentaler Rohling 103 zwischen den beiden Spannelementen 105-1 und 105-2 angeordnet werden. Die Spannstifte 115 befinden sich hierbei in schlitzförmigen Öffnungen 121, die entlang des Schlitzes um den Spannstift 115 verschoben werden können. In der Öffnungsstellung können die Spannstifte 115 aus den Öffnungen 121 herausbewegt werden.

Durch gegenseitiges Drehen in Pfeilrichtung lassen sich die beiden Spannelemente 105-1 und 105-2 in eine Schließstellung bringen. Dabei hintergreifen seitliche Vorsprünge 119 innerhalb der Öffnung 121 einen Kopf des Spannstifts 115, so dass ein Formschluss erreicht wird. Die Spannelemente 105-1 und 105-2 lassen sich in der Schließstellung nicht voneinander trennen. Zudem wird durch die Spannstifte 115 eine Zugkraft oder Spannkraft zwischen den beiden Spannelementen 105-1 und 105-2 ausgeübt, so dass der dentale Rohling 103 zwischen diesen gehalten wird.

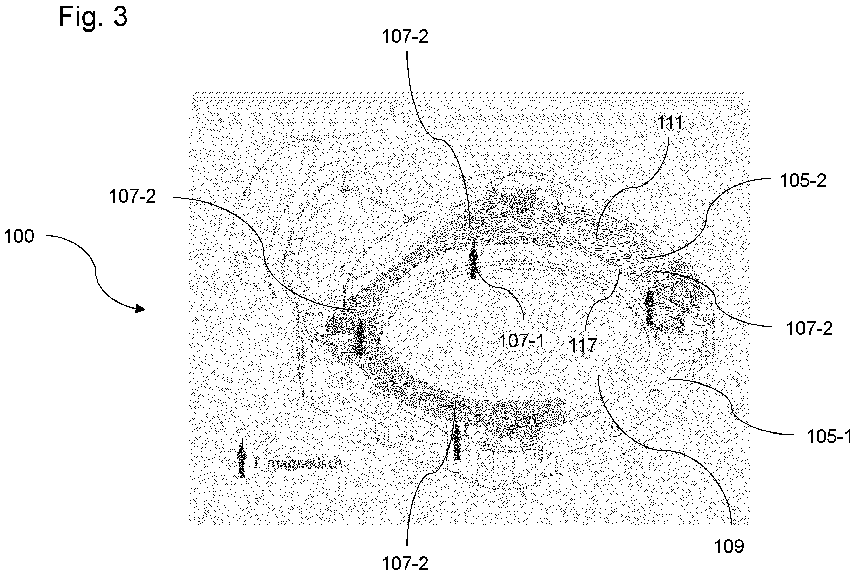

Fig. 3 zeigt eine weitere perspektivische Ansicht des Spannhalters 100 in der Öffnungsstellung. Das Spannelement 105-1 umfasst mehrere Magnetelemente 107-1, die in einer Kontaktfläche 111 zu dem anderen Spannelement 105-2 integriert sind und die um eine Öffnung 109 zum Einlegen des dentalen Rohlings 103 herum angeordnet sind. In gleicher Weise umfasst das Spannelement 105-2 ebenfalls mehrere Magnetelemente 107-2, die in einer gegenüberliegenden Kontaktfläche 117 zu dem anderen Spannelement 105-1 integriert sind und die ebenfalls um die Öffnung 109 zum Einlegen des dentalen Rohlings 103 herum angeordnet sind.

In der Öffnungsstellung liegen die Magnetelemente 107-1 und 107-2 jeweils paarweise gegenüber und stoßen sich gegenseitig ab, da diese gleichpolig zueinander orientiert sind. Dadurch ergibt sich eine abstoßende magnetische Kraft, die die Spannelemente 105-1 und 105-2 in der Öffnungsstellung in Pfeilrichtung auseinanderdrückt. Durch die Magnetelemente 107-1 und 107-2 wird daher ein Magnetmechanismus für den Spannhalter 100 zum Auseinanderdrücken der Spannelemente 105-1 und 105-2 realisiert.

Dadurch wird die Entnahme des Spannelements 105-2 aus dem Spannhalter 100 unterstützt. Die Entnahme des Spannelements 105-2 ist einfach möglich, da dieses erhöht in dem Grundkörper des darunter liegenden Spannelementes 105-1 liegt und die magnetische Kraft das Spannelement 105-2 anhebt. Durch das magnetische Schweben wird zusätzlich ein Verkippen des Spannelements 105-2 ermöglicht, das die Entnahme des dentalen Rohlings 103 weiter vereinfacht.

In der gezeigten Ausführungsform werden vier gleichpolige Paare von Magnetelementen 107-1 und 107-2 verwendet, die um die Öffnung 109 herum verteilt sind. Im Allgemeinen kann jedoch auch eine andere Zahl von Magnetelementen 107-1 und 107-2 verwendet werden, die in anderer Weise in den Spannelementen 105-1 und 105-2 angeordnet sind.

Bei der Anordnung von vier Magneten sollte mindestens eine Kraft von 6,5 bis 7,5 N zwischen dem ersten und dem zweiten Spannelement 105-1, 105-2 wirken. Bei einer realen Ausführung können vier Magnete mit Abmessungen von 5 mm x 3mm mit einer gemeinsamen Kraft von 6,9 N verwendet werden.

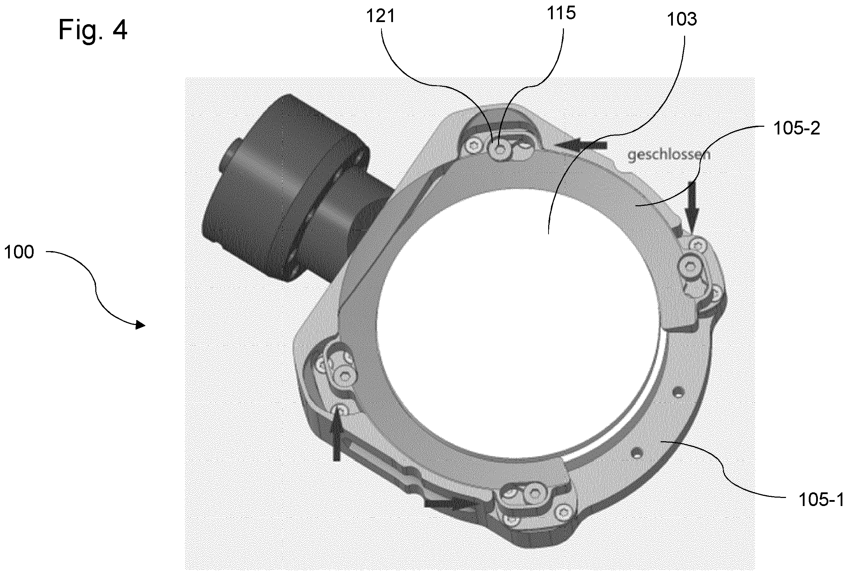

Fig. 4 zeigt eine perspektivische Ansicht des Spannhalters 100 in der Schließstellung. In der Schließstellung, die durch Drehen der Spannelemente 105-1 und 105-2 zueinander erreicht wird, befinden sich die Spannstifte 115 am entgegengesetzten Anschlag der schlitzförmigen Öffnungen 121. In der Schließstellung hintergreifen die seitlichen Vorsprünge 119 innerhalb der Öffnungen 121 den jeweiligen Kopf des Spannstifts 115. Auf diese Weise werden die beiden Spannelemente 105-1 und 105-2 miteinander gekoppelt. Die beweglichen Spannstifte 115 sind mit einer Kraft beaufschlagt, die sich als Zugkraft oder Spannkraft auf die Spannelemente 105-1 und 105-2 überträgt. Zum Ausüben der Zugkraft oder Spannkraft kann beispielsweise eine Feder verwendet werden.

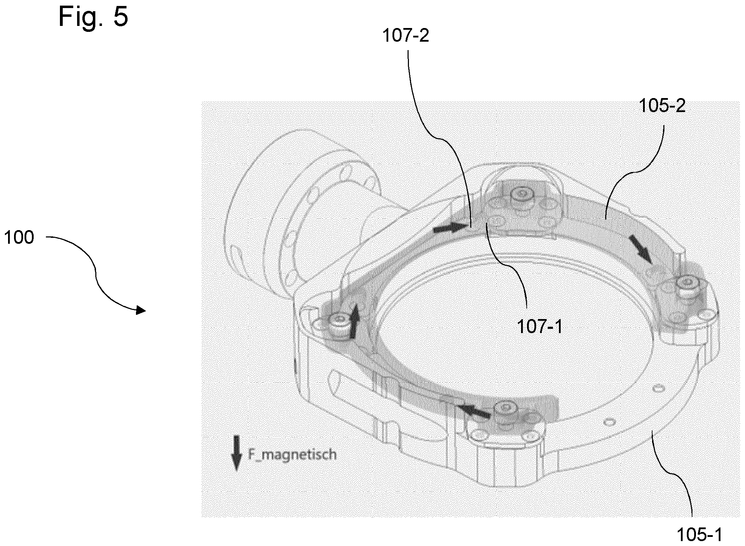

Fig. 5 zeigt eine weitere perspektivische Ansicht des Spannhalters 100 in der Übergangsstellung zur Schließstellung. In der Übergangsstellung werden die Magnetelemente 107-1 und 107-2 aus dem oberen und unteren Spannhalter 105-1 und 105-2 gegeneinander verschoben, so dass die magnetischen Pole voneinander getrennt werden. In diesem Fall wirkt keine magnetische Kraft mehr, die die Spannelemente 105-1 und 105-2 auseinanderdrückt. Durch eine zusätzliche seitliche Kraft wird ein Einrasten des Spannelementes 105-2 in der Schließstellung des Endanschlags unterstützt.

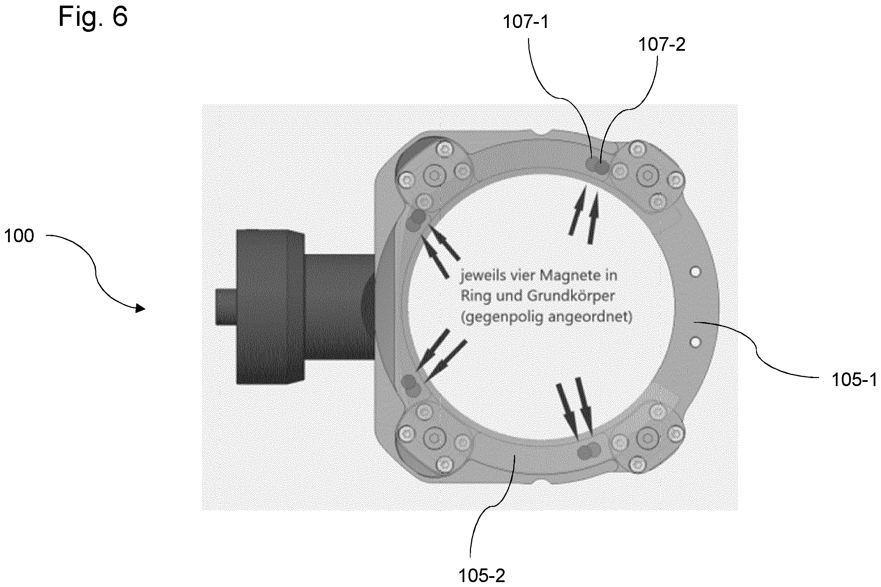

Fig. 6 zeigt eine Aufsicht auf den Spannhalter 100 in der Schließstellung und die Anordnung der Magnetelemente 107-1 und 107-2 in den jeweiligen Spannelementen 105-1 und 105-2. Um das Spannelement 105-2 in die Schließstellung zu bringen wird das Spannelement 105-2 leicht entgegen der abstoßenden Magnetkraft nach unten gedrückt und in die Schließstellung verdreht.

Diese Bewegung wird ebenfalls von den Magnetelementen 107-1 und 107-2 unterstützt, da sie weiterhin gleichpolig wirken. Dadurch schnellt das Spannelement 105-2 bis zum Anschlag in die Endposition und erzeugt dabei ein metallisches Geräusch, das dem Benutzer vermittelt, dass sich das Spannelement 105-2 in der Schließstellung befindet.

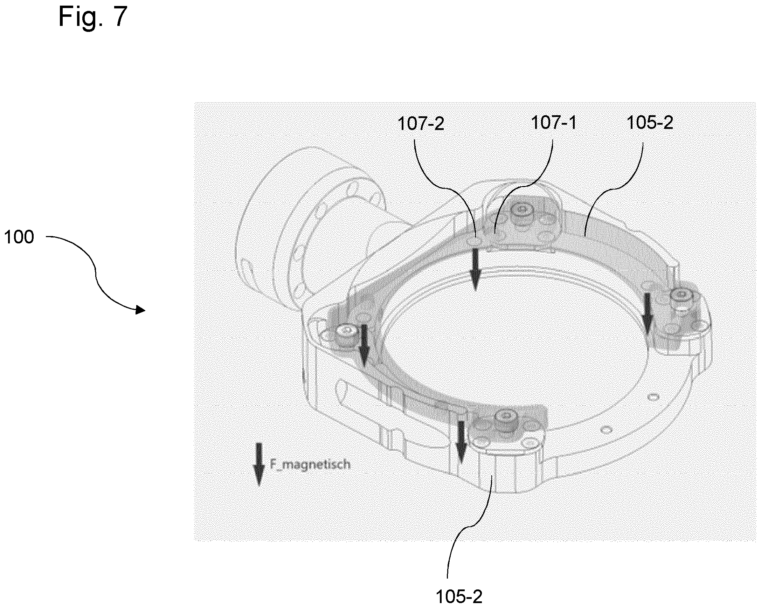

Fig. 7 zeigt eine weitere perspektivische Ansicht des Spannhalters 100 in der Schließstellung. Das Spannelement 105-2 ist ferromagnetisch und wird deshalb von den Magnetelementen 107-1 in diesem Zustand angezogen. Das Spannelement 105-2 wird durch die Wirkung der Magnetelemente 107-1 im Spannelement 105-1 auf das ferromagnetische Grundmaterial des Spannelements 105-2 niedergehalten. Zusätzlich wirken weiterhin die seitlich abstoßenden Kräfte zwischen den Magnetelementen 107-1 und 107-2, sodass das Spannelement 105-2 in der Schließstellung gehalten wird.

Um das Spannelement 105-2 wieder aus dieser Schließstellung zu bewegen, wird ein Drehmoment in Richtung der Öffnungsstellung ausgeübt. Das Spannelement 105-2 schnellt durch die abstoßenden Kräfte zwischen den Magnetelementen 107-1 und 107-2 in die Öffnungsstellung. Wird ein bestimmter Winkel überschritten, wird das Spannelement 105-2 wieder nach oben gedrückt und schwebt in der Öffnungsstellung in dem Spannhalter 100. Hierdurch wird in der Öffnungsstellung zudem ein zusätzliches akustisches Feedback durch einen metallischen Anschlag der Spannelemente 105-1 und 105-2 erreicht.

Die Magnetelemente 107-1 und 107-2 in den Spannelementen 105-1 und 105-2 dienen zur Verbesserung der Entnahme des Spannelementes 105-2 innerhalb des Spannhalters 100, so dass ein Schweben des Spannelementes 105-2 innerhalb des Spannhalters 100 erreicht wird. Durch das Schweben ist es dann einfach möglich, das Spannelement 105-2 und den dentalen Rohling 103 zu entnehmen. Zusätzlich wirkt der Effekt, dass das Spannelement 105-2 durch ein einseitiges Drücken gekippt werden kann, so dass die Entnahme des Spannelements 105-2 weiter vereinfacht wird. Das Spannelement 105-2 wird in der Öffnungsstellung durch die abstoßenden Magnetkräfte gehalten.

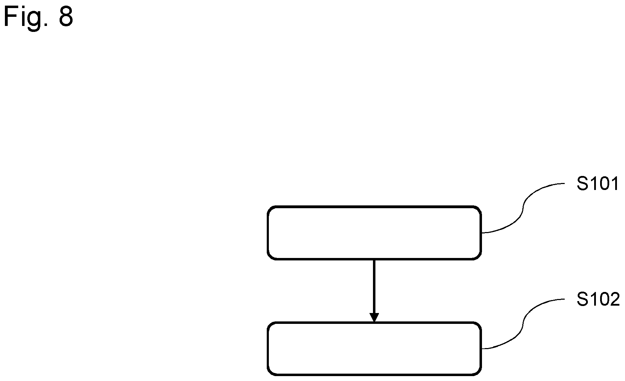

Fig. 8 zeigt ein Blockdiagramm eines Verfahrens zum Einspannen des dentalen Rohlings 103 in den Spannhalter 100. Das Verfahren umfasst den Schritt S101 eines Einspannens des dentalen Rohlings 103 zwischen dem ersten Spannelement 105-1 und dem zweiten Spannelement 105-2. In Schritt S102 wird das erste und zweite Spannelement 105-1 und 105-2 in einer Öffnungsstellung durch den Magnetmechanismus 107-1 und 107-2 auseinandergedrückt.

Das Verfahren ermöglicht das einfache Spannen von dentalen Rohlingen 103 in dem Spannhalter 100 bei hoher Benutzerfreundlichkeit und Benutzererlebnis. Die Handhabung beim werkzeuglosen Spannen des dentalen Rohlings 103 wird verbessert. Ein haptisches und akustisches Feedback des Spannhalters 100 werden zudem verbessert. Die Position zum Schließen des Spannhalters 100 wird durch die magnetische Kraftwirkung gehalten. Die Position des Spannelements 105-2 zur Entnahme wird gegenüber dem Spannelement 105-1 erhöht und gehalten.

Potenziell kann das Grundprinzip mit dem Magnetmechanismus bei jeglichem Spannhalter 100 für einen dentalen Rohling 103 angewendet werden.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Einrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHEN

- 100: Spannhalter
- 103: Dentaler Rohling
- 105: Spannelement
- 107: Magnetelement
- 109: Öffnung
- 111: Kontaktfläche
- 113: mechanische Schnittstelle
- 115: Spannstift
- 117: Kontaktfläche
- 119: Vorsprung
- 121: Öffnung

## Patentansprüche

1. Spannhalter (100) für einen dentalen Rohling (103), mit:
- einem ersten und einem zweiten Spannelement (105-1, 105-2) zum Einspannen des dentalen Rohlings (103); und
- einem Magnetmechanismus (107-1, 107-2) zum Auseinanderdrücken des ersten und des zweiten Spannelementes (105-1, 105-2) in einer Öffnungsstellung.

2. Spannhalter (100) nach Anspruch 1, wobei der Magnetmechanismus (107-1, 107-2) durch ein erstes Magnetelement (107-1) in oder an dem ersten Spannelement (105-1) und ein zweites Magnetelement (107-2) in oder an dem zweiten Spannelement (105-2) gebildet ist.

3. Spannhalter (100) nach Anspruch 2, wobei das erste Magnetelement (107-1) und das zweite Magnetelement (107-2) gleichpolig zueinander angeordnet sind.

4. Spannhalter (100) nach einem der vorangehenden Ansprüche, wobei das erste und/oder das zweite Spannelement (105-1, 105-2) ein ferromagnetisches Material umfasst.

5. Spannhalter (100) nach einem der vorangehenden Ansprüche, wobei das erste und/oder zweite Magnetelement (107-1, 107-2) derart angeordnet ist, dass eine Spannkraft zwischen dem ersten Spannelement (105-1) und dem zweiten Spannelement (105-2) in einer Schließstellung ausgeübt wird.

6. Spannhalter (100) nach einem der vorangehenden Ansprüche, wobei das erste und das zweite Magnetelement (107-1, 107-2) gegeneinander verschiebbar oder verdrehbar sind.

7. Spannhalter (100) nach einem der vorangehenden Ansprüche, wobei das erste Magnetelement (107-1) in einer Kontaktfläche (111) des ersten Spannelements (105-1) zu dem zweiten Spannelement (105-2) integriert ist und/oder das zweite Magnetelement (107-2) in einer Kontaktfläche (117) des zweiten Spannelements (105-2) zu dem ersten Spannelement (105-1) integriert ist.

8. Spannhalter (100) nach einem der vorangehenden Ansprüche, wobei das erste Spannelement (105-1) mehrere Magnetelemente (107-1) und/oder das zweite Spannelement (105-2) mehrere Magnetelemente (107-2) umfasst.

9. Spannhalter (100) nach Anspruch 8, wobei die Magnetelemente (107-1, 107-2) um eine Aussparung zum Einlegen des dentalen Rohlings herum angeordnet sind.

10. Spannhalter (100) nach einem der vorangehenden Ansprüche, wobei das erste und/oder zweite Magnetelement (107-1, 107-2) Neodym umfasst.

11. Spannhalter (100) nach einem der vorangehenden Ansprüche, wobei das erste und/oder das zweite Spannelement (105-1, 105-2) C-förmig oder ringförmig ist.

12. Verfahren zum Einspannen eines dentalen Rohlings (103) in einen Spannhalter (100), mit den Schritten:
- Einspannen (S101) des dentalen Rohlings (103) zwischen einem ersten Spannelement (105-1) und einem zweiten Spannelement (105-2); und
- Auseinanderdrücken (S102) des ersten und des zweiten Spannelementes (105-1, 105-2) in einer Öffnungsstellung durch einen Magnetmechanismus (107-1, 107-2).

13. Verfahren nach Anspruch 12, wobei eine Spannkraft zwischen dem ersten Spannelement (105-1) und dem zweiten Spannelement (105-2) durch den Magnetmechanismus in einer Schließstellung ausgeübt wird.

14. Verfahren nach Anspruch 12 oder 13, wobei das erste und das zweite Spannelement (105-1, 105-2) an mehreren Positionen durch den Magnetmechanismus auseinandergedrückt werden.

15. Verfahren nach einem der Ansprüche 12 bis 14, wobei das erste und das zweite Spannelement (105-1, 105-2) zwischen der Öffnungsstellung und der Schließstellung verdreht werden.
